# FASCICULE DE BREVET EUROPEEN

(11) **EP 1 448 696 B1**
(45) Date de publication et mention de la délivrance du brevet: **31.10.2018**
(21) Numéro de dépôt: 02792834.0
(22) Date de dépôt: 29.11.2002
(51) Int. Cl.: C08K 7/14, C08J 5/08

(54) **COMPOSITIONS THERMOPLASTIQUES A PROPRIETES MECANIQUES AMELIOREES.**
THERMOPLASTISCHE ZUSAMMENSETZUNGEN MIT VERBESSERTEN MECHANISCHEN EIGENSCHAFTEN
THERMOPLASTIC COMPOSITIONS WITH ENHANCED MECHANICAL PROPERTIES

(30) Priorité: 30.11.2001 FR 0115515
(43) Date de publication de la demande: 25.08.2004
(73) Titulaire: Rhodia Opérations S.A.S., 93306 Aubervilliers (FR)
(72) Inventeur: PEDUTO, Nicolangelo, I-20031 CESANO MADERNO (MI) (IT); SPERONI, Franco, I-20020 CERIANO LAGHETTO (MI) (IT); ZHANG, Haichun, I-20025 LEGNANO (MI) (IT); BRADLEY, Gérard, I-21047 SARONNO (VA) (IT)
(74) Mandataire: Schuck, Alexander
(86) Numéro de dépôt international: PCT/EP2002/013500
(87) Numéro de publication internationale: WO 2003/046070

(56) Documents cités:
- EP-A- 0 148 761
- EP-A- 0 313 003
- DATABASE WPI Section Ch, Week 198647 Derwent Publications Ltd., London, GB; Class A32, AN 1986-308857 XP002237970 & JP 61 228036 A (TOYOTA CENT RES & DEV LAB), 11 octobre 1986 (1986-10-11)
- DATABASE WPI Section Ch, Week 199009 Derwent Publications Ltd., London, GB; Class A28, AN 1990-064212 XP002237971 & JP 02 018454 A (MITSUBISHI GAS CHEM CO INC), 22 janvier 1990 (1990-01-22)

## Description

La présente invention concerne de nouvelles compositions thermoplastiques renforcées présentant un excellent compromis de propriétés, notamment de propriétés mécaniques. Les compositions présentent en particulier une résistance aux chocs importante, une bonne rigidité et un comportement satisfaisant lorsqu'elles sont soumises à des températures relativement élevées.

Parmi les propriétés que l'on cherche souvent à améliorer pour un matériau thermoplastique destiné à être mis en forme par des techniques telles que l'injection, l'injection-gaz, l'extrusion, l'extrusion-soufflage, on cite la rigidité, la résistance aux chocs, la stabilité dimensionnelle, en particulier à température relativement élevée, le faible retrait après mise en forme, l'aptitude à la mise en peinture par différents procédés, l'aspect de surface, la densité. Le choix d'un matériau pour une application donnée est généralement guidé par le niveau de performance exigé vis-à-vis de certaines propriétés et par son coût. On cherche toujours de nouveaux matériaux susceptibles de répondre à un cahier des charges en terme de performance et/ou de coût.

Pour améliorer les propriétés mécaniques d'un matériau thermoplastique, il est connu d'introduire des fibres de verre dans le matériau thermoplastique, comme charge de renfort. Généralement les propriétés mécaniques sont d'autant meilleures que la quantité de fibres de verre dans le matériau est importante, pour une fibre donnée. En conséquence les matériaux thermoplastiques renforcés destinés à être mis en forme par moulage sont souvent fortement chargés en fibres de verre.

La présence importante de fibres de verre dans les matériaux thermoplastiques présente plusieurs inconvénients.

Une forte concentration en fibres de verre dans un matériau peut entraîner des problèmes lors de traitements particuliers du matériau, comme l'aptitude à la mise en peinture par exemple. De plus, à forte concentration en fibres, des phénomènes d'anisotropie peuvent apparaître.

Il est connu également que lors de l'introduction, généralement réalisée dans une extrudeuse, de fibres de verre dans un matériau destiné à être moulé, les fibres de verres sont cassées. En effet on observe, pour une fibre de longueur d'origine et de diamètre donnés, une diminution de la longueur de la fibre dans le matériau lorsque la proportion en fibres dans la composition augmente. Le phénomène de casse peut également être mesurée par le facteur L/d, où L est la longueur et d est le diamètre de la fibre dans le matériau. En effet ce facteur est d'autant plus faible que la proportion en fibres dans le matériau est élevée.

JP 61 228036 A décrit une composition thermoplastique comprenant une matrice polyamide et des fibres de verre.

Pour obtenir une bonne amélioration des propriétés mécaniques, il est important de conserver l'intégrité des fibres de verre introduites dans le matériau, et donc de limiter le phénomène de casse lors du mélange avec le matériau. On recherche notamment un facteur L/d élevé afin d'améliorer les propriétés de renfort du matériau.

A cet effet la présente invention propose des compositions thermoplastiques de préférence faiblement chargées en fibres de verre qui ne présentent pas les inconvénients évoqués ci-dessus. Elle propose en particulier des compositions comprenant des fibres de verre de faible diamètre. Ces compositions présentent un excellent compromis entre les différentes propriétés mécaniques recherchées et la quantité de charge introduite.

La présente invention concerne également des compositions thermoplastiques qui présentent notamment une résistance aux chocs élevée, tout en maintenant ses autres propriétés mécaniques à un bon niveau.

La présente invention propose, selon un premier objet, une composition thermoplastique comprenant une matrice thermoplastique, un agent modificateur de chocs et des fibres de verre, caractérisée en ce que :
- les fibres de verre ont un diamètre inférieur à 10µm
- la proportion en poids des fibres de verre par rapport à la composition est inférieure ou égale à 50 %
- la matrice thermoplastique est un polyamide.

Selon un second objet, la présente invention propose des articles mis en forme à partir de ces compositions, notamment des articles moulés.

Par diamètre de fibre de verre on entend le diamètre des filaments unitaires.

Les fibres de verre conformes à l'invention peuvent être des fibres de type E (tel que défini dans "Handbook of Reinforced Plastics"-Ed.1964, p.120), dont le grammage (poids au kilomètre de fil) peut varier entre 600 et 2500 dtex.

Bien que les fibres E soient considérées comme convenant particulièrement bien aux applications auxquelles sont destinées les compositions conformes à l'invention, on peut utiliser d'autres fibres, soit exclusivement, soit en association avec des fibres E. L'ouvrage précité indique (pages 121-122) des exemples de telles fibres. Les fibres de verre utilisées pour l'obtention des compositions conformes à l'invention ont de préférence une longueur d'origine comprise entre 0,3 et 6 mm. On peut également utiliser des fils continus.

Les fibres de verre conformes à l'invention ont un diamètre inférieur à 10µm, de préférence inférieur à 9µm.

Ces fibres de verre conformes à l'invention peuvent être utilisées seules ou en association avec d'autres fibres de verre de diamètre supérieur à 10µm.

La proportion en poids des fibres de verre par rapport à la composition est inférieure ou égale à 50%. Selon un mode de réalisation préférentiel de l'invention, la proportion en poids des fibres de verre dans l'invention est comprise entre 1 et 50%, bornes incluses.

Cette proportion est avantageusement inférieure ou égale à 30%, de préférence inférieure ou égale à 20%.

La matrice thermoplastique conforme à l'invention est un polyamide thermoplastique. A titre d'exemple de polyamides pouvant convenir, on cite : le poly(4-amino butyrique acide), le poly(héxaméthylène adipamide), le poly(acide 6-aminohéxanoïque), le poly(m-xylylène adipamide), le poly(p-xylylène sébacamide), le poly(2,2,2-triméthyl héxaméthylène téréphtalamide), le poly(métaphénylène isophtalamide), le poly(p-phénylène téréphtalamide), et polymères de la même famille; les mélanges d'au moins deux des polymères précédents.

Parmi ces polymères thermoplastiques, on préfère tout particulièrement les polyamides semi-cristallins, tels que le polyamide 6, le polyamide 66, le polyamide 11, le polyamide 12, les polyamides 4-6, 6-10, 6-12, 6-36, 12-12, les polyamides semi-aromatiques, les polyphtalamides obtenus à partir d'acide téréphtalique et/ou isophtalique tels que le polyamide commercialisé sous le nom commercial AMODEL, leurs copolymères et alliages. D'autres polymères thermoplastiques préférés sont les alliages des polyamides cités précédemment avec d'autres polymères, notamment le PET, le PPO, le PBT, l'ABS ou des élastomères tes que le polypropylène

Selon une variante particulière de l'invention, la matrice thermoplastique est un polymère comprenant des chaînes macromoléculaires étoiles ou H, et le cas échéant des chaînes macromoléculaires linéaires. Les polymères comprenant de telles chaînes macromoléculaires étoiles ou H sont par exemple décrits dans les documents FR 2 743 077, FR 2 779 730, US 5 959 069, EP 0 632 703, EP 0 682 057 et EP 0 832 149. Ces composés sont connus pour présenter une fluidité améliorée par rapport à des polyamides linéaires. L'indice de fluidité de la matrice thermoplastique utilisée dans le cadre de cette variante particulière de l'invention, mesuré selon la norme ISO 1133 à 275°C sous une charge de 325g, est supérieur à 20 g/10 min.

Les chaînes macromoléculaires étoiles ou H de l'invention sont des chaînes à structure polyamide. Elles sont obtenues par utilisation d'un composé multifonctionnel présentant au moins trois fonctions réactives, toutes les fonctions réactives étant identiques. Ce composé peut être utilisé comme comonomère en présence d'autres monomères dans un procédé de polymérisation. Il peut également être mélangé à un polymère en fondu au cours d'une opération d'extrusion.

Les chaînes macromoléculaires étoiles ou H comportent un coeur et au moins trois branches du polyamide. Les branches sont liées au coeur par une liaison covalente, par l'intermédiaire d'un groupement amide ou d'un groupement d'une autre nature. Le coeur est un composé chimique organique ou organométallique, de préférence un composé hydrocarboné comportant éventuellement des hétéroatomes et auquel sont reliées les branches. Les branches sont des chaînes polyamides. Elles peuvent présenter des branchements, c'est notamment le cas pour les structures H. Les chaînes polyamides constituant les branches sont de préférence du type de celles obtenues par polymérisation des lactames ou aminoacides, par exemple de type polyamide 6.

La matrice thermoplastique selon la variante particulière de l'invention décrite ci-dessus comprend éventuellement, outre les chaînes étoiles ou H, des chaînes polyamides linéaires. Le rapport en poids entre la quantité de chaînes étoiles ou H dans la matrice et la somme des quantités de chaînes étoiles ou H et de chaînes linéaires est compris entre 0,1 et 1, bornes incluses. Il est de préférence compris entre 0,5 et 1.

Selon un mode de réalisation préférentiel de la variante particulière de l'invention, la matrice thermoplastique est un polyamide étoile, c'est-à-dire comprenant des chaînes macromoléculaires étoiles, obtenu par copolymérisation à partir d'un mélange de monomères comprenant :
a) un composé multifonctionnel comprenant au moins trois fonctions réactives identiques choisies parmi la fonction amine et la fonction acide carboxylique
b) des monomères de formules générales (IIa) et/ou (IIb) suivantes :

   X-R₂-Y (IIa)

   ou 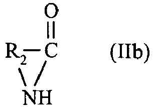
c) éventuellement des monomères de formule générale (III) suivante :

   Z-R₃-Z (III)

   dans lesquelles :
   - Z représente une fonction identique à celle des fonctions réactives du composé multifonctionnel
   - R₂, R₃ identiques ou différents représentent des radicaux hydrocarbonés aliphatiques, cycloaliphatiques ou aromatiques, substitués ou non, comprenant de 2 à 20 atomes de carbone, et pouvant comprendre des hétéroatomes,
   - Y est une fonction amine primaire quand X représente une fonction acide carboxylique, ou
   - Y est une fonction acide carboxylique quand X représente une fonction amine primaire

Par acide carboxylique, on entend les acides carboxyliques et leurs dérivés, tels que les anhydrides d'acide, les chlorures d'acide, les esters etc. Par amine, on entend les amines et leurs dérivés.

Des procédés d'obtention de ces polyamides étoiles sont décrits dans les documents FR 2.743.077 et FR 2.779.730. Ces procédés conduisent à la formation de chaînes macromoléculaires étoiles, en mélange avec éventuellement des chaînes macromoléculaires linéaires.

Dans le cas où on utilise un comonomère c), la réaction de polymérisation (polycondensation) est avantageusement effectuée jusqu'à l'atteinte de l'équilibre thermodynamique.

Selon un autre mode de réalisation préférentiel de la variante particulière de l'invention, la matrice thermoplastique est un polyamide H obtenu par copolymérisation à partir d'un mélange de monomères comprenant :
a) un composé multifonctionnel comprenant au moins trois fonctions réactives identiques choisies parmi la fonction amine et la fonction acide carboxylique
b) des lactames et/ou amino-acides
c) un composé difonctionnel choisi parmi les acides dicarboxyliques ou les diamines,
d) un composé monofonctionnel dont la fonction est soit une fonction amine soit une fonction acide carboxylique
les fonctions de c) et d) étant amine lorsque les fonctions de a) sont acide, les fonctions de c) et d) étant acide lorsque les fonctions de a) sont amine, le rapport en équivalents entre les groupements fonctionnels de a) et la somme des groupements fonctionnels de c) et d) étant compris entre 1,5 et 0,66, le rapport en équivalents entre les groupements fonctionnels de c) et les groupements fonctionnels de d) étant compris entre 0,17 et 1,5.

De tels polyamides H et leur procédé d'obtention sont décrits dans le brevet US 5959069.

Selon un autre mode de réalisation préférentiel de la variante particulière de l'invention, la matrice thermoplastique comprenant des chaînes macromoléculaires étoiles ou H, et le cas échéant des chaînes macromoléculaires linéaires, est obtenue par mélange en fondu, par exemple à l'aide d'un dispositif d'extrusion, d'un polyamide du type de ceux obtenus par polymérisation des lactames et/ou des aminoacides, et d'un composé multifonctionnel comprenant au moins trois fonctions réactives identiques choisies parmi la fonction amine ou acide carboxylique. Le polyamide est par exemple du polyamide 6.

De tels procédés d'obtention sont décrits dans les brevets EP 0.682.070 et EP 0.672.703.

Les composés multifonctionnels, monomères à l'origine des chaînes macomoléculaires étoile ou H de la variante particulière de l'invention, peuvent être choisis parmi les composés présentant une structure arborescente ou dendritique. Ils peuvent également être choisis parmi les composés représentés par la formule (IV) :

R1⁅A-z]ₘ (IV)

dans laquelle :
- R₁ est un radical hydrocarboné comprenant au moins deux atomes de carbone linéaire ou cyclique, aromatique ou aliphatique et pouvant comprendre des hétéroatomes,
- A est une liaison covalente ou un radical hydrocarboné aliphatique comprenant de 1 à 6 atomes de carbone,
- Z représente un radical amine primaire ou un radical acide carboxylique
- m est un nombre entier compris entre 3 et 8.

Selon une caractéristique particulière de l'invention, le radical R₁ est soit un radical cycloaliphatique tel que le radical tétravalent de cyclohexanonyle, soit un radical 1,1,1-triyle-propane, 1,2,3-triyle-propane.

Comme autres radicaux R₁ convenables pour l'invention on peut citer, à titre d'exemple, les radicaux trivalents de phényle et cyclohexanyle substitués ou non, les radicaux tétravalents de diaminopolyméthylène avec un nombre de groupes méthylène compris avantageusement entre 2 et 12 tels que le radical provenant de l'EDTA (acide éthylène diamino tétracétique), les radicaux octovalents de cyclohexanonyle ou cyclohexadinonyle, et les radicaux provenant de composés issus de la réaction des polyols tels que glycol, pentaérythritol, sorbitol ou mannitol avec l'acrylonitrile.

Le radical A est, de préférence, un radical méthylénique ou polyméthylénique tel que les radicaux éthyle, propyle ou butyle, ou un radical polyoxyalkylènique tel que le radical polyoxyéthylènique.

Selon un mode de réalisation particulier de l'invention, le nombre m est supérieur ou égal à 3 et avantageusement égal à 3 ou 4.

La fonction réactive du composé multifonctionnel représentée par le symbole Z est une fonction capable de former une fonction amide.

De préférence, les composés multifonctionnels sont choisis parmi la 2,2,6,6-tétra-(β -carboxyéthyl)-cyclohexanone, l'acide trimésique, la 2,4,6-tri-(acide aminocaproique)-1,3,5-triazine et la 4-aminoéthyle-1,8-octanediamine.

Le mélange de monomères à l'origine des chaînes macromoléculaires étoiles ou H de la variante particulière de l'invention peut comporter d'autres composés, tels que des limitateurs de chaînes, des catalyseurs, des additifs, tels que des stabilisants lumière, des stabilisants thermiques.

Selon une autre variante particulière de l'invention, la matrice thermoplastique de l'invention est un polymère de type arbre statistique, de préférence un copolyamide présentant une structure arbre statistique. Ces copolyamides de structure arbre statistique sont ainsi que leur procédé d'obtention sont notamment décrits dans le document WO 99/03909. Ces copolyamides sont du type de ceux obtenus par polycondensation de :
- au moins un monomère multifonctionnel répondant à la formule générale (V) suivante :

   (AR₄)-R-(R₅)ₙ (V)

   dans laquelle :
   - n est un nombre entier supérieur ou égal à 2, de préférence compris entre 2 et 10 (bornes incluses)
   - R₄, R₅ peuvent être identiques ou différents et représentent une liaison covalente, un radical hydrocarboné aliphatique, arylaliphatique, aromatique ou alkylaromatique
   - R est un radical aliphatique linéaire ou ramifié, un radical cycloaliphatique substitué ou non, un radical aromatique substitué ou non pouvant comprendre plusieurs noyaux aromatiques et/ou des hétéroatomes
   - A représente la fonction amine ou sel d'amine, ou la fonction acide, ester, halogénure d'acide ou amide
   - B représente la fonction amine ou sel d'amine quand A représente une fonction acide, ester, halogénure d'acide ou amide, et une fonction acide, ester, halogénure d'acide ou amide quand A représente une fonction amine ou sel d'amine,
- au moins un des monomères bifonctionnels de formules VI à VIII suivantes avec éventuellement au moins un des monomères monofonctionnels de formule IX ou X suivantes, ou avec un prépolymère obtenu à partir d'au moins un monomère bifonctionnel de formules VI à VIII suivantes et, éventuellement au moins un monomère monofonctionnel de formule IX ou X suivante,
   - les monomères bifonctionnels répondant aux formules générales suivantes :

      A₁-R₇-A₁ (VI)

      B₁-R₈-B₁ (VII)

      et/ou

      A₁-R₉-B₁ ou les lactames correspondants (VIII)
   - les monomères monofonctionnels répondant aux formules générales suivantes :

      R₁₀-B₁ (IX),

      et/ou

      R₁₁-A₁ (X)
   dans lesquelles :
   - A₁, B₁ représentent respectivement une fonction acide, ester, halogénure d'acide ou amide, et une fonction amine, ou un sel d'amine.
   - R₇, R₈, R₉, R₁₀, R₁₁ représentent des radicaux hydrocarbonés alkyles linéaires ou ramifiés, aromatiques substitués ou non, alkylaryles, arylalkyles ou cycloaliphatiques pouvant comprendre des insaturations

La matrice thermoplastique de l'invention peut également être une composition comprenant un polymère thermoplastique linéaire et un polymère thermoplastique étoile, H et/ou arbre tels que décrits ci-dessus.

Les compositions de l'invention peuvent également comprendre un copolyamide hyperbranché du type de ceux décrits dans le document WO 00/68298.

Les compositions de l'invention peuvent également comprendre toute combinaison de polymère thermoplastique étoile, H, arbre, copolyamide hyperbranché décrit ci-dessus.

Les compositions comprennent, outre une matrice thermoplastique et des fibres de verre, un agent modificateur de la résistance aux chocs.

Les agents modificateurs préférés de l'invention sont des polyoléfines présentant ou non un caractère élastomérique. On peut également utiliser des élastomères.

Selon une caractéristique préférée de l'invention, au moins une partie des composés modificateurs de la résilience de la composition comprennent des fonctions polaires capables de réagir avec le polyamide. Ces fonctions polaires peuvent être, par exemple, des fonctions acides, esters, anhydrides, glycidiles ou carboxylates comme l'anhydride maléique, acryliques, méthacryliques ou époxy.

Ces fonctions sont généralement greffées ou copolymérisées sur la chaîne macromoléculaire des composés.

Comme polyoléfines convenables pour l'invention, on peut citer les polyéthylènes, polypropylènes, polybutylènes ou les copolymères d'éthylène et d'a-oléfines tels que les éthylène / propylène diènes, les copolymères d'éthylène et de propylène, les EPDM, EPR, le polystyrène butadiène éthylène, tel que le styrène éthylène butadiène styrène (SEBS), les copolymères de polyoléfines avec l'acétate de vinyle, avec l'acrylate et/ou avec l'acide acrylique, les ionomères. On peut utiliser ces polyoléfines en mélange ou en copolymères.

Préférentiellement, on peut utiliser un élastomère terpolymère d'éthylène-méthyle acrylate-glycidyl méthacrylate (E-MA-GMA) et/ou un élastomère copolymère d'éthylène-glycidyl méthacrylate (E-GMA).

Comme agent modificateur de la résistance aux chocs convenable pour l'invention, on peut citer également les caoutchoucs nitriles et les élastomères silicones.

D'une manière générale on peut utiliser conformément à l'invention, n'importe quel polymère présentant des capacités de modification de la résistance aux chocs.

Les compositions de l'invention comprenant un agent modificateur de la résistance aux chocs présentent notamment une excellente résistance aux chocs, même à de faibles concentrations en agent, ce qui représente notamment un avantage économique.

La proportion en poids de l'agent modificateur dans les compositions de l'invention est avantageusement inférieure à 10%, de préférence inférieure à 8%.

On précise que les compositions de l'invention peuvent comporter d'autres composés. Il peut en effet s'agir de composés de stabilisation, de pigmentation, d'ignifugation, de catalyse, d'autres composés de renfort. Elles peuvent également comporter des charges minérales, telles que du kaolin, de la wollastonite, du talc, des nanoparticules ou des fibres de renfort autres que les fibres de verre de l'invention, telles que d'autres fibres de verre ou de carbone ou des fibres minérales. Ces autres composés ou charges ou fibres peuvent être introduits dans la composition lors des étapes de fabrication de celle-ci. On peut également utiliser des fibres polymériques comme le kevlar par exemple.

On détaille à présent des procédés pouvant être utilisés pour la préparation d'une composition selon l'invention.

Les compositions thermoplastiques sont généralement obtenues par mélange des différents composés entrant dans la composition, les composés thermoplastiques étant sous forme fondue. On procède à plus ou moins haute température, à plus ou moins haute force de cisaillement selon la nature des différents composés. Les composés peuvent être introduits simultanément ou successivement. Tous les moyens connus de l'homme du métier concernant l'introduction des différents composés d'une composition à l'état fondu peuvent être utilisés. On utilise généralement un dispositif d'extrusion dans lequel la matière est chauffée, soumise à une force de cisaillement, et véhiculée. De tels dispositifs sont parfaitement connus de l'homme du métier.

Selon un mode de réalisation, on mélange tous les composés en phase fondue au cours d'une unique opération, par exemple au cours d'une opération d'extrusion. On peut par exemple procéder à un mélange de granulés des matériaux polymériques, les introduire dans le dispositif d'extrusion afin de les fondre et de les soumettre à un cisaillement plus ou moins important, et introduire les fibres de verre et éventuellement les autres composés. Selon une variante, on peut introduire les fibres de verre sous forme d'un mélange concentré de la matrice et des fibres de verre, préparé par exemple par mélange en phase fondue. De même on peut introduire l'agent modificateur de la résistance aux chocs sous forme d'un mélange concentré de la matrice et de l'agent. Les compositions de l'invention peuvent également être préparées par un procédé de pultrusion connu de l'homme du métier

La composition selon l'invention, lorsqu'elle est préparée à l'aide d'un dispositif d'extrusion est de préférence conditionnée sous forme de granulés.

Elle, ou plus précisément les granulés, est destinée à être mise en forme à l'aide de procédés impliquant une fusion pour l'obtention d'articles. Les articles sont ainsi constitués de la composition. Il peut s'agir d'articles moulés par exemple.

L'utilisation des compositions selon l'invention est particulièrement intéressante dans le cadre de la fabrication d'articles pour l'industrie automobile, en particulier pour la fabrication de pièces de carrosserie.

D'autres détails ou avantages de l'invention apparaîtront plus clairement au vu des exemples donnés ci-dessous uniquement à titre indicatif.

### Composés utilisés

Composé A1 : polyamide 66 de viscosité relative 2,6, mesurée dans l'acide sulfurique à 95,7% selon la norme ISO 307
Composé A2 : polyamide étoile, obtenu par copolymérisation à partir de caprolactame en présence 0.48% en moles de 2,2,6,6-tétra(β-carboxyéthyl)cyclohexanone, selon un procédé décrit dans le document FR 2743077, comprenant environ 80% de chaînes macromoléculaires étoiles et 20% de chaînes macromoléculaires linéaires, d'indice de fluidité en phase fondue mesuré à 275°C sous 325 g de 45 g/10 minute.
Composé A3 : polyamide étoile, obtenu par copolymérisation à partir de caprolactame en présence 0,41% en moles de 2,2,6,6-tétra(β-carboxyéthyl)cyclohexanone, selon un procédé décrit dans le document FR 2743077, comprenant environ 80% de chaînes macromoléculaires étoiles et 20% de chaînes macromoléculaires linéaires, d'indice de fluidité en phase fondue mesuré à 275°C sous 325 g de 30 g/10 minute.
Composé B1 : fibres de verre de diamètre 6,5µm et de longueur 3+/-1mm, commercialisé par la société NEC Nippon Electric Glass sous la référence ECS-03T289DE.
Composé B2 : fibres de verre de diamètre 7µm et de longueur 4,5 mm
Composé B3 : fibres de verre de diamètre 10µm et de longueur 4,5 mm
Composé C : agent modificateur de la résilience commercialisé par la société Exxon Mobil sous la référence Exxelor 1803, copolymère élastomérique éthylène fonctionnalisé avec de l'anhydride maléique.
Composé D : Elastomère terpolymère d'éthylène-méthyle acrylate-glycidyl méthacrylate E-MA-GMA commercialisé par la société Atofina sous la référence Lotader® Grade AX 8920.

### Préparation des compositions

Les compositions ont été préparées par mélange en phase fondue à l'aide d'une extrudeuse bi-vis de type WERNER et PFLEIDERER ZSK 25. Les conditions d'extrusion étaient les suivantes:
- Température: entre 260 et 280°C (exemples 1, 2, 5 à 10), entre 230 et 250°C (exemple 3 et 4),
- Vitesse de rotation: 250 tours/min
- Débit 18 kg/heure

### Mise en forme des compositions

Les compositions après extrusion sont moulées par injection à l'aide d'une machine de type Arbug 320M. Les conditions d'injection sont du type :
- Température : 270°C (exemples 1, 2, 5 à 10), entre 220 et 235°C (exemple 3 et 4)
- Vitesse d'injection : 70 cm³/s (exemples 1, 2, 5 à 10); 80 cm³/s (exemple 3 et 4)
- Pression d'injection : 1300 bars
- Température du moule : 80°C

### Evaluations

Les propriétés mécaniques des compositions sont évaluées comme suit :
- Module de traction selon la norme ISO 527, mesuré après conditionnement de l'éprouvette à 23°C à l'état sec brut de moulage à une humidité relative de 50% selon la norme ISO 1874-2
- Contrainte à la rupture selon la norme ISO 527, mesurée après conditionnement de l'éprouvette à 23°C à l'état sec brut de moulage à une humidité relative de 50% selon la norme ISO 1874-2
- Elongation à la rupture selon la norme ISO 527, mesurée après conditionnement de l'éprouvette à 23°C à l'état sec brut de moulage à une humidité relative de 50% selon la norme ISO 1874-2
- Résistance au choc IZOD entaillé selon la norme ISO 180\1A, mesurée après conditionnement de l'éprouvette à 23°C à l'état sec brut de moulage à une humidité relative de 50% selon la norme ISO 1874-2
- Résistance au choc IZOD non entaillé selon la norme ISO 180\1U, mesurée après conditionnement de l'éprouvette à 23°C à l'état sec brut de moulage à une humidité relative de 50% selon la norme ISO 1874-2
- Température de déformation sous charge (HDT-Heat deflection temperature) selon la norme ISO 75Ae, sous charge de 1,8 N/mm²

### Exemples 1-2 : Compositions PA 66 + fibres de verre diamètre 6,5µm

Les compositions préparées sont présentées en tableau I. Les pourcentages du tableau I sont des pourcentages massiques.

**Tableau I**

| Exemple | 1 | 2 | A (comparatif) | B (comparatif) |
|---|---|---|---|---|
| Composé A1 (%) | 90 | 85 | 90 | 85 |
| Composé B1 (%) | 10 | 15 | - | - |
| Composé B3 (%) | - | - | 10 | 15 |

| | | | | |
|---|---|---|---|---|
| Les propriétés sont présentées en tableau II | | | | |

**Tableau II**

| Exemple | 1 | A | 2 | B |
|---|---|---|---|---|
| Module de traction (N/mm²) | 4830 | 4830 | 5760 | 5810 |
| Contrainte à la rupture (N/mm²) | 121 | 109 | 145 | 130 |
| Elongation à la rupture (%) | 3,6 | 2,8 | 4,1 | 2,8 |
| Résistance au choc IZOD non entaillé (kJ/m²) | 44 | 32 | 49 | 34 |
| Résistance au choc IZOD entaillé (kJ/m²) | 4,4 | 5,7 | 5,2 | 7,4 |

Pour une proportion en poids donnée de fibres de verre, les compositions de l'invention comprenant des fibres de verre de diamètre 6,5µm présentent notamment une contrainte à la rupture, une résistance au choc IZOD non entaillé (et une élongation à la rupture) améliorées par rapport aux compositions comprenant des fibres de verre de diamètre 10µm

### Exemples 3-4 : Compositions polyamide étoile + fibres de verre

Les compositions préparées sont présentées en tableau III. Les pourcentages du tableau IIII sont des pourcentages massiques.

**Tableau III**

| Exemple | 3 | 4 | C (comparatif) | D (comparatif) |
|---|---|---|---|---|
| Composé A2 (%) | 90 | 85 | 90 | 85 |
| Composé B2 (%) | 10 | 15 | - | - |
| Composé B3 (%) | - | - | 10 | 15 |

Les propriétés sont présentées en tableau IV

**Tableau IV**

| Exemple | 3 | C | 4 | D |
|---|---|---|---|---|
| Module de traction (N/mm²) | 5170 | 5150 | 6420 | 6210 |
| Contrainte à la rupture (N/mm²) | 106 | 77 | 130 | 94 |
| Elongation à la rupture (%) | 2,5 | 1,6 | 2,6 | 1,7 |
| Résistance au choc IZOD non entaillé (kJ/m²) | 26 | 15 | 30 | 20 |

Pour une proportion en poids donnée de fibres de verre, les compositions de l'invention comprenant des fibres de verre de diamètre 7µm présentent notamment une contrainte à la rupture, une résistance au choc IZOD non entaillé (et une élongation à la rupture) améliorées par rapport aux compositions comprenant des fibres de verre de diamètre 10µm.

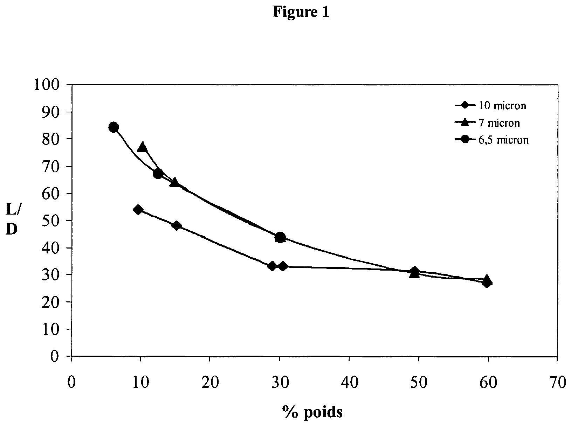

La figure 1 représente un graphique décrivant l'évolution du facteur L/d (rapport de la longueur des fibres de verre sur le diamètre des fibres) en fonction de la proportion en poids des fibres de verre dans la composition.
Cette évolution est mesurée après extrusion et moulage par injection de compositions comprenant comme matrice thermoplastique le composé A2, par dissolution des compositions dans l'acide formique et mesures au microscope.
On mesure cette évolution sur ces compositions pour différents diamètres de fibres (10, 6,5 et 7µm), chaque diamètre de fibres correspond à une courbe sur le graphique. Les compositions comprenant des fibres de diamètre 6,5 et 7µm présentent, pour des proportions en poids en fibres de verre inférieures ou égales à 50%, un facteur L/d plus élevé que les compositions comprenant des fibres de diamètre 10µm. Le facteur L/D des fibres est davantage conservée pour des fibres de faible diamètre (6,5 et 7 µm) que pour des fibres de diamètre plus important (10µm).

### Exemples 5 à 7 : Compositions PA 66+fibres de verre diamètre 6,5µm+agent modificateur de la résistance au choc

Les compositions préparées sont présentées en tableau V. Les pourcentages du tableau V sont des pourcentages massiques.

**Tableau V**

| Exemple | 5 | 6 | 7 | E (comparatif) | F (comparatif) | G (comparatif) |
|---|---|---|---|---|---|---|
| Composé A1 (%) | 90 | 85 | 80 | 90 | 85 | 80 |
| Composé B1 (%) | 5 | 10 | 15 | - | - | - |
| Composé B3 (%) | - | - | - | 5 | 10 | 15 |
| Composé C (%) | 5 | 5 | 5 | 5 | 5 | 5 |

Les propriétés sont présentées en tableau VI

**Tableau VI**

| Exemple | 5 | E | 6 | F | 7 | G |
|---|---|---|---|---|---|---|
| Module de traction (N/mm²) | 3770 | 3800 | 4550 | 4720 | 5540 | 5600 |
| Contrainte à la rupture (N/mm²) | 84 | 86 | 111 | 103 | 132 | 118 |
| Elongation à la rupture (%) | 9,8 | 6,1 | 4,9 | 4,8 | 4,1 | 4,2 |
| Résistance au choc IZOD entaillé (kJ/m²) | 7,3 | 3,7 | 9,6 | 5,3 | 12,3 | 8,0 |
| Résistance au choc IZOD non entaillé (kJ/m²) | 58 | 34 | 61 | 45 | 68 | 59 |
| Température de déformation sous charge (°C) | 207 | 186 | 229 | 234 | 244 | 239 |

Pour une proportion de fibres de verre donnée, les compositions de l'invention comprenant des fibres de diamètre 6,5µm présentent notamment une résistance au choc IZOD entaillé et non entaillé améliorée par rapport à des compositions comprenant des fibres de diamètre 10µm.

### Exemples 8 à 10 : Compositions PA 66+fibres de verre diamètre 7µm+agent modificateur de la résistance au choc

Les compositions préparées sont présentées en tableau VII. Les pourcentages du tableau VII sont des pourcentages massiques.

**Tableau VII**

| Exemple | 8 | 9 | 10 |
|---|---|---|---|
| Composé A1 (%) | 90 | 85 | 80 |
| Composé B2 (%) | 5 | 10 | 15 |
| Composé B3 (%) | - | - | - |
| Composé C (%) | 5 | 5 | 5 |

Les propriétés sont présentées en tableau VIII

**Tableau VIII**

| Exemple | 8 | E | 9 | F | 10 | G |
|---|---|---|---|---|---|---|
| Module de traction (N/mm²) | 3770 | 3800 | 4580 | 4720 | 6200 | 5600 |
| Contrainte à la rupture (N/mm²) | 87 | 86 | 112 | 103 | 142 | 118 |
| Elongation à la rupture (%) | 8,4 | 6,1 | 5,1 | 4,8 | 4,3 | 4,2 |
| Résistance au choc IZOD entaillé (kJ/m²) | 5,1 | 3,7 | 6,9 | 5,3 | 11,4 | 8,0 |
| Résistance au choc IZOD non entaillé (kJ/m²) | 45 | 34 | 64 | 45 | 65 | 59 |
| Température de déformation sous charge (°C) | 220 | 186 | 228 | 234 | 243 | 239 |

Pour une proportion de fibres de verre donnée, les compositions de l'invention comprenant des fibres de diamètre 7µm présentent notamment une résistance au choc IZOD entaillé et non entaillé améliorée par rapport à des compositions comprenant des fibres de diamètre 10µm.

### Exemple 11 : Influence du diamètre de la fibre sur l'amélioration de la résistance au choc IZOD entaillé lors de l'introduction d'agent modificateur dans des compositions PA66

L'augmentation de la résistance au choc IZOD entaillé lors de l'introduction de 5% d'agent modificateur dans les compositions des exemples 1 (correspondant après introduction à l'exemple 6), 2 (correspondant après introduction à l'exemple 7), A (correspondant après introduction à l'exemple F) et B (correspondant après introduction à l'exemple G)

**Tableau IX**

| Exemple | 1 | 2 | A | B |
|---|---|---|---|---|
| Pourcentage d'augmentation de la résistance au choc IZOD entaillé (%) | +118,2 | +136,5 | -7 | +8,1 |

Pour une proportion donnée de fibres de verre, l'introduction de 5% d'agent modificateur de résilience dans les compositions de l'invention comprenant des fibres de verre de diamètre 6,5µm conduit à une amélioration nettement plus importante de la résistance au choc IZOD entaillé que l'introduction de 5% d'agent modificateur de résilience dans des compositions comprenant des fibres de verre de diamètre 10µm.

### Exemples 12-17 : Compositions polyamide étoile + fibres de verre + agent modificateur de la résistance au choc

Les compositions préparées sont présentées au tableau X. Les pourcentages du tableau sont des pourcentages massiques. Leurs propriétés sont présentées au tableau XI.

**Tableau X**

| Exemple | 12 | 13 | 14 | 15 | 16 | 17 | H | I | J |
|---|---|---|---|---|---|---|---|---|---|
| Composé A3 (%) | 95 | 90 | 85 | 94 | 89 | 84 | 94 | 89 | 84 |
| Composé B1 (%) | 5 | 10 | 15 | 5 | 10 | 15 | - | - | - |
| Composé B3 (%) | - | - | - | - | - | - | 5 | 10 | 15 |
| Composé D (%) | - | - | - | 1 | 1 | 1 | 1 | 1 | 1 |

**Tableau XI**

| Exemple | 12 | 13 | 14 | 15 | 16 | 17 | H | I | J |
|---|---|---|---|---|---|---|---|---|---|
| Module de traction (N/mm²) | 4930 | 5670 | 6650 | 3660 | 4690 | 5450 | 3780 | 5100 | 6230 |
| Contrainte à la rupture (N/mm²) | 85 | 100 | 120 | 90 | 115 | 139 | 84 | 92 | 110 |
| Elongation à la rupture (%) | 2,1 | 2,0 | 2,3 | 3,1 | 3,2 | 3,5 | 2,8 | 2,8 | 3,1 |
| Résistance au choc IZOD entaillé (kJ/m²) | 4,5 | 6,5 | 6,9 | 5,0 | 7,5 | 8,0 | 4,5 | 5,8 | 6,7 |
| Résistance au choc IZOD non entaillé (kJ/m²) | 29 | 32 | 36 | 35 | 37 | 42 | 21 | 23 | 24 |
| Température de déformation sous charge (°C) | - | 193 | 202 | - | 194 | 198 | - | 187 | 195 |

Pour une proportion de fibres de verre donnée, les compositions de l'invention comprenant un polyamide étoile et des fibres de diamètre 6,5µm présentent notamment une résistance au choc IZOD entaillé et non entaillé améliorée par rapport à des compositions comprenant des fibres de diamètre 10µm. Les propriétés mécaniques sont encore augmentées en présence d'un composé modificateur de chocs.

## Revendications

1. Composition thermoplastique comprenant :
- une matrice thermoplastique,
- des fibres de verre ayant un diamètre inférieur à 10 µm, la proportion en poids des fibres de verre par rapport à la composition étant inférieure ou égale à 50%, et
- un agent modificateur de chocs ;
**caractérisée en ce que** la matrice thermoplastique est un polyamide.

2. Composition selon la revendication 1, **caractérisée en ce que** la proportion en poids des fibres de verre par rapport à la composition est comprise entre 1 et 50%.

3. Composition selon l'une des revendications précédentes, **caractérisée en ce que** la proportion en poids des fibres de verre par rapport à la composition est inférieure ou égale à 30%.

4. Composition selon la revendication 3, **caractérisée en ce que** la proportion en poids des fibres de verre par rapport à la composition est inférieure ou égale à 20%.

5. Composition selon l'une des revendications précédentes, **caractérisée en ce que** le diamètre des fibres de verre est inférieur ou égal à 9µm.

6. Composition selon l'une des revendications 1 à 5, **caractérisée en ce que** l'agent modificateur de la résistance aux chocs est un élastomère.

7. Composition selon l'une des revendications 1 à 6, **caractérisée en ce que** la proportion en poids de l'agent modificateur de la résistance aux chocs par rapport à la composition est inférieure à 10%.

8. Composition selon la revendication 7, **caractérisée en ce que** la proportion de l'agent modificateur en poids de la résistance aux chocs par rapport à la composition est inférieure à 8%.

9. Composition selon l'une des revendications précédentes, **caractérisée en ce que** la matrice thermoplastique est choisie parmi les polyamides choisis dans le groupe comprenant le polyamide 6, le polyamide 66, le polyamide 11, le polyamide 12, les polyamides 4-6, 6-10, 6-12, 6-36, 12-12, les polyamides semi-aromatiques, leurs copolymères et alliages, les alliages de ces polyamides avec le PET, le PPO, le PBT ou l'ABS.

10. Composition selon l'une des revendications 1 à 8, **caractérisée en ce que** la matrice thermoplastique est un polymère thermoplastique comprenant :
- des chaînes macromoléculaires étoiles ou H comprenant un ou plusieurs coeur et au moins trois branches ou trois segments polyamides liés à un coeur
- le cas échéant des chaînes macromoléculaires linéaires l'indice de fluidité en phase fondue de la matrice thermoplastique mesuré selon la norme ISO 1133 à 275°C sous 325 g de charge étant supérieur à 20 g/10 min.

11. Composition selon la revendication 10, **caractérisée en ce que** le rapport en poids entre les chaînes macromoléculaires étoiles ou H et la somme des chaînes macromoléculaires étoiles ou H et des chaînes linéaires dans la matrice thermoplastique est compris entre 0,1 et 1.

12. Composition selon la revendication 10 ou 11, **caractérisée en ce que** la matrice thermoplastique est un polyamide étoile, obtenu par copolymérisation à partir d'un mélange de monomères comprenant :
a) un composé multifonctionnel comprenant au moins trois fonctions réactives identiques choisies parmi la fonction amine et la fonction acide carboxylique
b) des monomères de formules générales (IIa) et/ou (IIb) suivantes :
X-R₂-Y (IIa)
ou 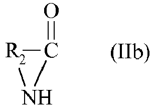
c) éventuellement des monomères de formule générale (III) suivante :
Z-R₃-Z (III)
dans lesquelles :
• Z représente une fonction identique à celle des fonctions réactives du composé multifonctionnel
• R₂, R₃ identiques ou différents représentent des radicaux hydrocarbonés aliphatiques, cycloaliphatiques ou aromatiques, substitués ou non, comprenant de 2 à 20 atomes de carbone, et pouvant comprendre des hétéroatomes,
• Y est une fonction amine primaire quand X représente une fonction acide carboxylique, ou
• Y est une fonction acide carboxylique quand X représente une fonction amine primaire.

13. Composition selon l'une des revendications 10 ou 11, **caractérisée en ce que** la matrice thermoplastique est un polyamide H obtenu par copolymérisation à partir d'un mélange de monomères comprenant :
a) un composé multifonctionnel comprenant au moins trois fonctions réactives identiques choisies parmi la fonction amine et la fonction acide carboxylique
b) des lactames et/ou amino-acides
c) un composé difonctionnel choisi parmi les acides dicarboxyliques ou les diamines,
d) un composé monofonctionnel dont la fonction est soit une fonction amine soit une fonction acide carboxylique
les fonctions de c) et d) étant amine lorsque les fonctions de a) sont acide, les fonctions de c) et d) étant acide lorsque les fonctions de a) sont amine, le rapport en équivalents entre les groupements fonctionnels de a) et la somme des groupements fonctionnels de c) et d) étant compris entre 1,5 et 0,66, le rapport en équivalents entre les groupements fonctionnels de c) et les groupements fonctionnels de d) étant compris entre 0,17 et 1,5.

14. Composition selon l'une des revendications 10 ou 11, **caractérisée en ce que** la matrice thermoplastique est obtenue par extrusion d'un mélange de polyamide du type de ceux obtenus par polymérisation des lactames et/ou des aminoacides, et d'un composé multifonctionnel comprenant au moins trois fonctions réactives identiques choisies parmi la fonction amine ou acide carboxylique.

15. Composition selon l'une des revendications 12 à 14 **caractérisée en ce que** le composé multifonctionnel présente une structure arborescente ou dendritique.

16. Composition selon l'une des revendications 12 à 14 **caractérisée en ce que** le composé multifonctionnel est représenté par la formule (I)
R1⁅A-z]ₘ (I)
dans laquelle :
• R₁ est un radical hydrocarboné comprenant au moins deux atomes de carbone linéaire ou cyclique, aromatique ou aliphatique et pouvant comprendre des hétéroatomes,
• A est une liaison covalente ou un radical hydrocarboné aliphatique comprenant de 1 à 6 atomes de carbone,
• Z représente un radical amine primaire ou un groupement carboxylique
• m est un nombre entier compris entre 3 et 8.

17. Composition selon la revendication 16, **caractérisée en ce que** le composé multifonctionnel est choisi parmi la 2,2,6,6-tétra-(β-carboxyéthyl)-cyclohexanone, l'acide trimésique, la 2,4,6-tri-(acide aminocaproique)-1,3,5-triazine, la 4-aminoéthyle-1,8-octanediamine.

18. Composition selon l'une des revendications 1 à 8 **caractérisée en ce que** la matrice thermoplastique est un copolyamide de structure arbre statistique du type de ceux obtenus par polycondensation de :
• au moins un monomère multifonctionnel répondant à la formule générale (V) suivante :
(AR₄)-R-(R₅)ₙ (V)
dans laquelle :
- n est un nombre entier supérieur ou égal à 2, de préférence compris entre 2 et 10 (bornes incluses)
- R₄, R₅ peuvent être identiques ou différents et représentent une liaison covalente, un radical hydrocarboné aliphatique, arylaliphatique, aromatique ou alkylaromatique
- R est un radical aliphatique linéaire ou ramifié, un radical cycloaliphatique substitué ou non, un radical aromatique substitué ou non pouvant comprendre plusieurs noyaux aromatiques et/ou des hétéroatomes
- A représente la fonction amine ou sel d'amine, ou la fonction acide, ester, halogénure d'acide ou amide
- B représente la fonction amine ou sel d'amine quand A représente une fonction acide, ester, halogénure d'acide ou amide, et une fonction acide, ester, halogénure d'acide ou amide quand A représente une fonction amine ou sel d'amine,
• au moins un des monomères bifonctionnels de formules VI à VIII suivantes avec éventuellement au moins un des monomères monofonctionnels de formule IX ou X suivantes, ou avec un prépolymère obtenu à partir d'au moins un monomère bifonctionnel de formules VI à VIII suivantes et, éventuellement au moins un monomère monofonctionnel de formule IX ou X suivante,
- les monomères bifonctionnels répondant aux formules générales suivantes :
A₁-R₇-A₁ (VI)
B₁-R₈-B₁ (VII)
et/ou
A₁-R₉-B₁ ou les lactames correspondants (VIII)
- les monomères monofonctionnels répondant aux formules générales suivantes :
R₁₀-B₁ (IX),
et/ou
R₁₁-A₁ (X)
dans lesquelles :
- A₁, B₁ représentent respectivement une fonction acide, ester, halogénure d'acide ou amide, et une fonction amine, ou un sel d'amine.
- R₇, R₈, R₉, R₁₀, R₁₁ représentent des radicaux hydrocarbonés alkyles linéaires ou ramifiés, aromatiques substitués ou non, alkylaryles, arylalkyles ou cycloaliphatiques pouvant comprendre des insaturations

19. Composition selon l'une des revendications 1 à 8, **caractérisée en ce que** la matrice thermoplastique est une composition comprenant un polymère thermoplastique linéaire et un polymère thermoplastique étoile et/ou H et/ou arbre.

20. Composition selon l'une des revendications 1 à 19, **caractérisée en ce que** la composition comprenant un copolyamide hyperbranché.

21. Composition selon l'une des revendications précédentes, **caractérisée en ce qu'**elle comprend un additif choisi dans le groupe comprenant les composés de stabilisation, de pigmentation, d'ignifugation, de catalyse, de renfort, ou une charge minérale.

22. Article mis en forme à partir d'une composition selon l'une des revendications précédentes.

## Patentansprüche

1. Thermoplastische Zusammensetzung, umfassend:
- eine thermoplastische Matrix,
- Glasfasern mit einem Durchmesser von weniger als 10 µm, wobei der Gewichtsanteil der Glasfasern, bezogen auf die Zusammensetzung, kleiner oder gleich 50 % ist, und
- einen Schlagzähigkeitsmodifikator;
**dadurch gekennzeichnet, dass** es sich bei der thermoplastischen Matrix um ein Polyamid handelt.

2. Zusammensetzung nach Anspruch 1, **dadurch gekennzeichnet, dass** der Gewichtsanteil der Glasfasern, bezogen auf die Zusammensetzung, zwischen 1 und 50 % liegt.

3. Zusammensetzung nach einem der vorhergehenden Ansprüche, **dadurch gekennzeichnet, dass** der Gewichtsanteil der Glasfasern, bezogen auf die Zusammensetzung, kleiner oder gleich 30 % ist.

4. Zusammensetzung nach Anspruch 3, **dadurch gekennzeichnet, dass** der Gewichtsanteil der Glasfasern, bezogen auf die Zusammensetzung, kleiner oder gleich 20 % ist.

5. Zusammensetzung nach einem der vorhergehenden Ansprüche, **dadurch gekennzeichnet, dass** der Durchmesser der Glasfasern kleiner oder gleich 9 µm ist.

6. Zusammensetzung nach einem der Ansprüche 1 bis 5, **dadurch gekennzeichnet, dass** es sich bei dem Schlagzähigkeitsmodifikator um ein Elastomer handelt.

7. Zusammensetzung nach einem der Ansprüche 1 bis 6, **dadurch gekennzeichnet, dass** der Gewichtsanteil des Schlagzähigkeitsmodifikators, bezogen auf die Zusammensetzung, kleiner als 10 % ist.

8. Zusammensetzung nach Anspruch 7, **dadurch gekennzeichnet, dass** der Gewichtsanteil des Schlagzähigkeitsmodifikators, bezogen auf die Zusammensetzung, kleiner als 8 % ist.

9. Zusammensetzung nach einem der vorhergehenden Ansprüche, **dadurch gekennzeichnet, dass** die thermoplastische Matrix aus Polyamiden aus der Gruppe umfassend Polyamid 6, Polyamid 66, Polyamid 11, Polyamid 12, Polyamiden 4-6, 6-10, 6-12, 6-36 und 12-12, teilaromatischen Polyamiden, Copolymeren und Legierungen davon und Legierungen dieser Polyamide mit PET, PPO, PBT oder ABS ausgewählt ist.

10. Zusammensetzung nach einem der Ansprüche 1 bis 8, **dadurch gekennzeichnet, dass** es sich bei der thermoplastischen Matrix um ein thermoplastisches Polymer, das
- sternförmige oder H-förmige makromolekulare Ketten mit einem oder mehreren Kernen und mindestens drei Polyamidverzweigungen oder drei Polyamidsegmenten, die an einen Kern gebunden sind,
- gegebenenfalls lineare makromolekulare Ketten umfasst, handelt, wobei der gemäß der ISO-Norm 1133 bei 275 °C unter einer Last von 325 g gemessene Schmelzflussindex der thermoplastischen Matrix größer als 20 g/10 min ist.

11. Zusammensetzung nach Anspruch 10, **dadurch gekennzeichnet, dass** das Gewichtsverhältnis zwischen den sternförmigen oder H-förmigen makromolekularen Ketten und der Summe der sternförmigen oder H-förmigen Ketten und den linearen Ketten in der thermoplastischen Matrix zwischen 0,1 und 1 liegt.

12. Zusammensetzung nach Anspruch 10 oder 11, **dadurch gekennzeichnet, dass** es sich bei der thermoplastischen Matrix um ein durch Copolymerisation aus einer Mischung von Monomeren, umfassend
a) eine multifunktionelle Verbindung mit mindestens drei identischen reaktiven Funktionen, die aus der Aminfunktion und der Carbonsäurefunktion ausgewählt sind,
b) Monomeren der folgenden allgemeinen Formeln (IIa) und/oder (IIb):
X-R₂-Y (IIa)
oder 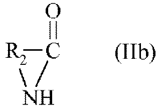
c) gegebenenfalls Monomere der folgenden allgemeinen Formel (III):
Z-R₃-Z (III)
erhaltenes sternförmiges Polyamid handelt, wobei:
• Z für eine Funktion steht, die mit derjenigen der reaktiven Funktionen der multifunktionellen Verbindung identisch ist,
• R₂ und R₃ gleich oder verschieden sind und für gegebenenfalls substituierte aliphatische, cycloaliphatische oder aromatische Kohlenwasserstoffreste mit 2 bis 20 Kohlenstoffatomen und gegebenenfalls Heteroatomen stehen,
• Y eine primäre Aminfunktion ist, wenn X für eine Carbonsäurefunktion steht oder
• Y für eine Carbonsäurefunktion steht, wenn X für eine primäre Aminfunktion steht.

13. Zusammensetzung nach einem der Ansprüche 10 oder 11, **dadurch gekennzeichnet, dass** es sich bei der thermoplastischen Matrix um ein durch Copolymerisation mindestens einer Mischung von Monomeren, umfassend:
a) eine multifunktionelle Verbindung mit mindestens drei identischen reaktiven Funktionen, die aus der Aminfunktion und der Carbonsäurefunktion ausgewählt sind,
b) Lactamen und/oder Aminosäuren,
c) eine difunktionelle Verbindung, die aus Dicarbonsäuren oder Diaminen ausgewählt ist,
d) eine monofunktionelle Verbindung, bei deren Funktion es sich entweder um eine Aminfunktion oder um eine Carbonsäurefunktion handelt,
erhaltenes H-förmiges Polyamid handelt, wobei es sich bei den Funktionen von c) und d) um Amin handelt, wenn es sich bei den Funktionen von a) um Säure handelt, wobei es sich bei den Funktionen von c) und d) um Säure handelt, wenn es sich bei den Funktionen von a) um Amin handelt, wobei das Äquivalentverhältnis zwischen den funktionellen Gruppen von a) und der Summe der funktionellen Gruppen von c) und d) zwischen 1,5 und 0,66 liegt und wobei das Äquivalentverhältnis zwischen den funktionellen Gruppen von c) und den funktionellen Gruppen von d) zwischen 0,17 und 1,5 liegt.

14. Zusammensetzung nach einem der Ansprüche 10 oder 11, **dadurch gekennzeichnet, dass** die thermoplastische Matrix durch Extrusion einer Mischung von Polyamid des Typs derjenigen, die durch Polymerisation von Lactamen und/oder Aminosäuren erhalten werden, und einer multifunktionellen Verbindung mit mindestens drei identischen reaktiven Funktionen, die aus der Amin- oder Carbonsäure Funktion ausgewählt sind, erhalten wird.

15. Zusammensetzung nach einem der Ansprüche 12 bis 14, **dadurch gekennzeichnet, dass** die multifunktionelle Verbindung eine baumartige oder dendritische Struktur aufweist.

16. Verbindung nach einem der Ansprüche 12 bis 14, **dadurch gekennzeichnet, dass** sie multifunktionelle Verbindung durch die Formel (I)
R1⁅A-z]ₘ (I)
wiedergegeben wird, in der:
• R₁ für einen linearen oder cyclischen, aromatischen oder aliphatischen Kohlenwasserstoffrest mit mindestens zwei Kohlenstoffatomen und gegebenenfalls Heteroatomen steht,
• A für eine kovalente Bindung oder einen aliphatischen Kohlenwasserstoffrest mit 1 bis 6 Kohlenstoffatomen steht,
• Z für einen primären Aminrest oder eine Carboxylgruppe steht,
• m für eine ganze Zahl zwischen 3 und 8 steht.

17. Zusammensetzung nach Anspruch 14, **dadurch gekennzeichnet, dass** die multifunktionelle Verbindung aus 2, 2, 6, 6-Tetra(β-carboxyethyl)-cyclohexanon, Trimesinsäure, 2,4,6-Tri(aminocapronsäure)-1,3,5-triazin und 4-Aminoethyl-1,8-octadiamin ausgewählt ist.

18. Zusammensetzung nach einem der Ansprüche 1 bis 8, **dadurch gekennzeichnet, dass** es sich bei der thermoplastischen Matrix um ein Copolyamid mit statistischer Baumstruktur vom Typ derjenigen, die durch Polykondensation von:
• mindestens einem multifunktionellen Monomer der folgenden allgemeinen Formel (V):
(AR₄) -R- (R₅)ₙ (V)
in der:
n für eine ganze Zahl größer oder gleich 2, vorzugsweise zwischen 2 und 10 (Grenzen eingeschlossen), steht,
- R₄ und R₅ gleich oder verschieden sein können und für eine kovalente Bindung oder einen aliphatischen, arylaliphatischen, aromatischen oder alkylaromatischen Kohlenwasserstoffrest stehen,
- R für einen linearen oder verzweigten aliphatischen Rest, einen gegebenenfalls substituierten cycloaliphatischen Rest oder einen gegebenenfalls substituierten aromatischen Rest, der mehrere aromatische Kerne und/oder Heteroatome enthalten kann, steht,
- A für die Amin- oder Aminsalzfunktion oder die Säure-, Ester-, Säurehalogenid- oder Amidfunktion steht,
- B für die Amin- oder Aminsalzfunktion steht, wenn A für eine Säure-, Ester-, Säurehalogenid- oder Amidfunktion steht, und für eine Säure-, Ester-, Säurehalogenid- oder Amidfunktion steht, wenn A für eine Amin- oder Aminsalzfunktion steht,
• mindestens einem der bifunktionellen Monomere der folgenden Formeln VI bis VIII, gegebenenfalls mit mindestens einem der monofunktionelle Monomere der folgenden Formel IX oder X oder mit einem aus mindestens einem bifunktionellen Monomere der folgenden Formeln VI bis VIII und gegebenenfalls mindestens einem monofunktionelle Monomere der folgenden Formel IX oder X erhaltenen Prepolymer,
- wobei die bifunktionellen Monomere den folgenden allgemeinen Formeln entsprechen:
A₁-R₇-A₁ (VI)
B₁-R₈-B₁ (VII)
und/oder
A₁-R₉-A₁ oder den entsprechenden Lactamen (VIII)
- wobei die monofunktionellen Monomere den folgenden allgemeinen Formeln entsprechen:
R₁₀-B₁ (IX)
und/oder
R₁₁-A₁ (X),
in denen
- A₁ und B₁ für eine Säure-, Ester-, Säurehalogenid- oder Amidfunktion bzw. eine Amin- oder Aminsalzfunktion stehen,
- R₇, R₈, R₉, R₁₀ und R₁₁ für lineare oder verzweigte Alkyl-Kohlenwasserstoffreste, gegebenenfalls substituierte aromatische Kohlenwasserstoffreste, Alkylaryl-Kohlenwasserstoffreste, Arylalkyl-Kohlenwasserstoffreste oder cycloaliphatische Kohlenwasserstoffreste, die Ungesättigtheiten enthalten können, stehen,
erhalten werden, handelt.

19. Zusammensetzung nach einem der Ansprüche 1 bis 8, **dadurch gekennzeichnet, dass** es sich bei der thermoplastischen Matrix um eine Zusammensetzung, die ein lineares thermoplastisches Polymer und ein sternförmiges und/oder H-förmiges und/oder baumförmiges thermoplastisches Polymer umfasst, handelt.

20. Zusammensetzung nach einem der Ansprüche 1 bis 19, **dadurch gekennzeichnet, dass** die Zusammensetzung ein hyperverzweigtes Copolyamid umfasst.

21. Zusammensetzung nach einem der vorhergehenden Ansprüche, **dadurch gekennzeichnet, dass** sie ein Additiv aus der Gruppe umfassend stabilisierend, pigmentierend, flammhemmend, katalysierend und verstärkend wirkende Verbindungen oder einen mineralischen Füllstoff umfasst.

22. Artikel, gebildet aus einer Zusammensetzung nach einem der vorhergehenden Ansprüche.

## Claims

1. Thermoplastic composition comprising:
- a thermoplastic matrix,
- glass fibers having a diameter of less than 10 µm, the proportion by weight of the glass fibers relative to the composition being less than or equal to 50%, and
- an impact modifier;
**characterized in that** the thermoplastic matrix is a polyamide.

2. Composition according to Claim 1, **characterized in that** the proportion by weight of the glass fibers relative to the composition is between 1 and 50%.

3. Composition according to either of the preceding claims, **characterized in that** the proportion by weight of the glass fibers relative to the composition is less than or equal to 30%.

4. Composition according to Claim 3, **characterized in that** the proportion by weight of the glass fibers relative to the composition is less than or equal to 20%.

5. Composition according to one of the preceding claims, **characterized in that** the diameter of the glass fibers is less than or equal to 9 µm.

6. Composition according to one of Claims 1 to 5, **characterized in that** the impact modifier is an elastomer.

7. Composition according to one of Claims 1 to 6, **characterized in that** the proportion by weight of the impact modifier relative to the composition is less than 10%.

8. Composition according to Claim 7, **characterized in that** the proportion by weight of the impact modifier relative to the composition is less than 8%.

9. Composition according to one of the preceding claims, **characterized in that** the thermoplastic matrix is selected from polyamides selected from the group consisting of polyamide 6, polyamide 66, polyamide 11, polyamide 12, polyamides 4-6, 6-10, 6-12, 6-36 and 12-12, semiaromatic polyamides, copolymers and alloys thereof, and the alloys of these polyamides with PET, PPO, PBT or ABS.

10. Composition according to one of Claims 1 to 8, **characterized in that** the thermoplastic matrix is a thermoplastic polymer comprising:
- H-shaped or star-shaped macromolecular chains comprising one or more cores and at least three branches or three polyamide segments connected to a core,
- where appropriate, linear macromolecular chains, the melt flow index of the thermoplastic matrix, measured in accordance with standard ISO 1133 at 275°C under a load of 325 g, being greater than 20 g/10 min.

11. Composition according to Claim 10, **characterized in that** the ratio by weight between the H-shaped or star-shaped macromolecular chains and the sum of the H-shaped or star-shaped macromolecular chains and the linear chains in the thermoplastic matrix is between 0.1 and 1.

12. Composition according to Claim 10 or 11, **characterized in that** the thermoplastic matrix is a star polyamide obtained by copolymerization from a mixture of monomers comprising:
a) a polyfunctional compound comprising at least three identical reactive functions selected from the amine function and the carboxylic acid function,
b) monomers of general formulae (IIa) and/or (IIb) as follows:
X-R₂-Y (IIa)
or 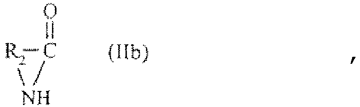
c) optionally monomers of general formula (III) as follows:
Z-R₃-Z (III)
in which
• Z represents a function identical to that of the reactive functions of the polyfunctional compound,
• R₂ and R₃, which are identical or different, represent substituted or unsubstituted aliphatic, cycloaliphatic or aromatic hydrocarbon radicals containing 2 to 20 carbon atoms and possibly containing heteroatoms,
• Y is a primary amine function when X represents a carboxylic acid function, or
• Y is a carboxylic acid function when X represents a primary amine function.

13. Composition according to either of Claims 10 and 11, **characterized in that** the thermoplastic matrix is an H-shaped polyamide obtained by copolymerization from a mixture of monomers comprising:
a) a polyfunctional compound comprising at least three identical reactive functions selected from the amine function and the carboxylic acid function,
b) lactams and/or amino acids,
c) a difunctional compound selected from dicarboxylic acids or diamines,
d) a monofunctional compound whose function is either an amine function or a carboxylic acid function,
the functions of c) and d) being amine when the functions of a) are acid, the functions of c) and d) being acid when the functions of a) are amine, the ratio in equivalents between the functional groups of a) and the sum of the functional groups of c) and d) being between 1.5 and 0.66, and the ratio in equivalents between the functional groups of c) and the functional groups of d) being between 0.17 and 1.5.

14. Composition according to either of Claims 10 and 11, **characterized in that** the thermoplastic matrix is obtained by extrusion of a mixture of polyamide of the type obtained by polymerizing lactams and/or amino acids and of a polyfunctional compound comprising at least three identical reactive functions selected from the amine function or carboxylic acid function.

15. Composition according to one of Claims 12 to 14, **characterized in that** the polyfunctional compound exhibits an arborescent or dendritic structure.

16. Composition according to one of Claims 12 to 14, **characterized in that** the polyfunctional compound is represented by the formula (I)
R1⁅A-z]ₘ (I)
in which:
• R₁ is a hydrocarbon radical containing at least two carbon atoms, which is linear or cyclic, aromatic or aliphatic and may contain heteroatoms,
• A is a covalent bond or an aliphatic hydrocarbon radical containing 1 to 6 carbon atoms,
• Z represents a primary amine radical or a carboxyl group, and
• m is an integer between 3 and 8.

17. Composition according to Claim 16, **characterized in that** the polyfunctional compound is selected from 2,2,6,6-tetra(β-carboxyethyl)cyclohexanone, trimesic acid, 2,4,6-tri(aminocaproic acid)-1,3,5-triazine and 4-aminoethyl-1,8-octanediamine.

18. Composition according to one of Claims 1 to 8, **characterized in that** the thermoplastic matrix is a copolyamide of random tree structure, of the type obtained by polycondensation of:
• at least one polyfunctional monomer satisfying the following general formula (V):
(AR₄) -R- (R₅)ₙ (V)
in which:
- n is an integer greater than or equal to 2, preferably between 2 and 10 (inclusive),
- R₄ and R₅ may be identical or different and they represent a covalent bond or an aliphatic, arylaliphatic, aromatic or alkylaromatic hydrocarbon radical,
- R is a linear or branched aliphatic radical, a substituted or unsubstituted cycloaliphatic radical or a substituted or unsubstituted aromatic radical possibly comprising two or more aromatic rings and/or heteroatoms,
- A represents the amine or amine salt function, or the acid, ester, acid halide or amide function,
- B represents the amine or amine salt function when A represents an acid, ester, acid halide or amide function, and an acid, ester, acid halide or amide function when A represents an amine or amine salt function,
• at least one of the difunctional monomers of formulae VI to VIII below with optionally at least one of the monofunctional monomers of formula IX or X below, or with a prepolymer obtained from at least one difunctional monomer of formulae VI to VIII below and optionally at least one monofunctional monomer of formula IX or X below,
- the difunctional monomers satisfying the following general formulae:
A₁-R₇-A₁ (VI)
B₁-R₈-B₁ (VII)
and/or
A₁-R₉-B₁ or the corresponding lactams (VIII)
- the monofunctional monomers satisfying the following general formulae:
R₁₀-B₁ (IX),
and/or
R₁₁-A₁ (X)
in which:
- A₁ and B₁ represent respectively an acid, ester, acid halide or amide function and an amine function or an amine salt,
- R₇, R₈, R₉, R₁₀ and R₁₁ represent linear or branched alkyl hydrocarbon radicals, substituted or unsubstituted aromatic hydrocarbon radicals or alkylaryl, arylalkyl or cycloaliphatic hydrocarbon radicals which may include unsaturations.

19. Composition according to one of Claims 1 to 8, **characterized in that** the thermoplastic matrix is a composition comprising a linear thermoplastic polymer and a thermoplastic star and/or H-shaped and/or tree polymer.

20. Composition according to one of Claims 1 to 19, **characterized in that** the composition comprises a hyperbranched copolyamide.

21. Composition according to one of the preceding claims, **characterized in that** it comprises an additive selected from the group consisting of stabilizing, pigmenting, flame retarding, catalyzing and reinforcing compounds or a mineral filler.

22. Article formed from a composition according to one of the preceding claims.
